# EUROPÄISCHE PATENTSCHRIFT

(11) **EP 1 157 141 B1**
(45) Veröffentlichungstag und Bekanntmachung des Hinweises auf die Patenterteilung: **22.06.2005**
(21) Anmeldenummer: 00909105.9
(22) Anmeldetag: 26.01.2000
(51) Int. Cl.: C23C 4/02, C23C 4/12

(54) **VERFAHREN UND VORRICHTUNG ZUM BEARBEITEN EINER OBERFLÄCHE EINES BAUTEILS**
METHOD AND DEVICE FOR TREATING A COMPONENT SURFACE
PROCEDE ET DISPOSITIF PERMETTANT D'USINER LA SURFACE D'UNE PIECE

(30) Priorität: 19.02.1999 DE 19907103; 01.09.1999 DE 19941563
(43) Veröffentlichungstag der Anmeldung: 28.11.2001
(73) Patentinhaber: Volkswagen Aktiengesellschaft, 38436 Wolfsburg (DE)
(72) Erfinder: HEINEMANN, Rolf, D-38165 Lehre (DE); FÄRBER, Klaus, D-38158 Gifhorn (DE); HEIDER, Thomas, D-38448 Wolfsburg (DE)
(86) Internationale Anmeldenummer: PCT/EP2000/000574
(87) Internationale Veröffentlichungsnummer: WO 2000/049193

(56) Entgegenhaltungen:
- EP-A- 0 352 482
- EP-A- 0 903 423
- DD-A- 242 638
- US-A- 4 832 798

## Beschreibung

Die Erfindung betrifft ein Verfahren zum Bearbeiten einer Oberfläche eines Bauteils in einer Bearbeitungszone, gemäß dem Oberbegriff des Anspruchs 1, Die Erfindung betrifft femer eine Vorrichtung zum Bearbeiten einer Oberfläche eines Bauteils, gemäß dem Oberbegriff des Anspruchs 15.

Die für Zylinderkurbelgehäuse vorwiegend eingesetzten untereutektischen Aluminium-Silizium-Legierungen sind aufgrund des zu geringen Anteils der verschleißfesten Siliziumphase für die tribologische Beanspruchung des Systems Kolben-Kolbenring-Zylinderlaufbahn ungeeignet. Übereutektische Legierungen, z.B. die Legierung AlSil₇Cu₄Mg besitzen einen ausreichenden Anteil an Siliziumkristalliten. Dieser harte, verschleißbeständige Gefügebestandteil wird durch chemische und/oder mechanische Bearbeitungsstufen gegenüber der aus dem Aluminiummischkristall bestehenden Matrix hervorgehoben und bildet einen erforderlichen Tragflächenanteil. Nachteilig wirkt sich jedoch die gegenüber den untereutektischen und naheutektischen Legierungen mangelhafte Vergießbarkeit, die schlechte Bearbeitbarkeit und die hohen Kosten für diese Legierung aus.

Eine Möglichkeit zur Umgehung dieses Nachteils ist das Eingießen von Laufbuchsen aus verschleißbeständigem Material wie z.B. Grauguß- und übereutektischen Aluminiumlegierungen. Problematisch ist hier jedoch die Verbindung zwischen Buchse und Umguß, welcher alleine durch eine mechanische Verzahnung gewährleistet wird. Durch Einsatz eines porösen keramischen Buchsenwerkstoffs ist es möglich, beim Gießprozeß diesen zu infiltrieren und zu einer stofflichen Verbindung zu gelangen. Dazu ist eine langsame Formfüllung sowie die Anwendung von hohem Druck erforderlich, was die Wirtschaftlichkeit des Verfahrens erheblich herabsetzt.

Alternativ werden unter- und naheutektischen Legierungen der galvanische Beschichtungen direkt auf die Laufbahnen aufgebracht. Dies ist jedoch teuer und tribochemisch nur ungenügend beständig. Eine weitere Alternative bilden thermische Spritzschichten, welche ebenfalls direkt auf die Laufflächen appliziert werden. Die Haftfestigkeit dieser Schichten ist jedoch aufgrund einer alleinigen mikromechanischen Verklammerung nur ungenügend.

Es wurde daher bereits vorgeschlagen, die Oberflächenmodifikationen Umschmelzen, Einlegieren, Dispergieren und Beschichten durch den Einsatz eines Lasers auszuführen, wie beispielsweise aus der DE 196 43 029 A1 bekannt. Hierbei ergibt sich jedoch der Nachteil, daß die so erstellten Beschichtungen der Zylinderiaufbahn zu Porös sind und eine relativ geringe Eindringtiefe aufweisen. In der Folge kommt es zu einer geringeren Anhaftung der aufgebrachten Schicht als wünschenswert ist.

Aus der Schrift EP 0 837 152 A1 ist bereits ein Verfahren zum Bearbeiten von Zylinderlaufflächen von Zylindern eines Kurbelgehäuses einer Hubkolben-Brennkraftmaschine bekannt, bei dem ein zugeführter Pulverstrahl eines Silizium-Pulvers mittels eines Laserstrahls aufgeschmolzen und in Form feiner Tröpfchen als Schichtmaterial auf die zu beschichtende Oberfläche aufgetragen wird. Dabei hat dieses bekannte Verfahren jedoch den Nachteil, dass hier die geschmolzenen Silizium-Tröpfchen auf die unbearbeitete Oberfläche der Zylinderwand auftreffen und so lediglich einen Materialauftrag auf dieser erzeugen, dessen Haftung auf dem Grundmaterial bei hoher Belastung eingeschränkt ist.

Der vorliegenden Erfindung liegt die Aufgabe zugrunde, ein verbessertes Verfahren der obengenannten Art sowie eine verbesserte Vorrichtung der o.g. Art zur Verfügung zu stellen, welche die zuvor erwähnten Nachteile beseitigen und eine niedrigporöse Schicht mit hoher Anhaftung erzielt in kurzer Prozeßzeit.

Diese Aufgabe wird erfindungsgemäß durch ein Verfahren der o.g. Art mit den in Anspruch 1 gekennzeichneten Merkmalen und durch eine Vorrichtung der o.g. Art mit den in Anspruch 15 gekennzeichneten Merkmalen gelöst. Vorteilhafte Ausgestaltungen der Erfindung sind in den abhängigen Ansprüchen angegeben.

Bei einem Verfahren der o.g. Art ist es erfindungsgemäß vorgesehen, daß in einem Arbeitsgang die Oberfläche des Bauteils sowohl mittels thermischem Spritzen als auch mittels einer Laseroberflächenbehandlung bearbeitet wird.

Dies hat den Vorteil, daß eine Bearbeitung mit höherer Eindringtiefe, besserem Werkstoffeintrag und besserer Ankopplung eines mit thermischem Spritzen aufgetragenen Werkstoffes an dem Werkstoff des Bauteils erzielt wird.

Das thermische Spritzen umfaßt beispielsweise Flammspritzen, Plasmaspritzen oder HV-Spritzen.

Zu dem wird die Laseroberflächenbehandlung, insbesondere ein Umschmelzen, örtlich vor, im Bereich und/oder örtlich nach der Bearbeitungszone, in der das thermische Spritzen erfolgt, durchgeführt. Zum weiteren Verbessern von Eigenschaften der aufgebrachten Beschichtung wird nach der Bearbeitung die Oberfläche des Bauteils zusätzlich mit einem Laserstrahl bearbeitet, insbesondere umgeschmolzen.

Zweckmäßigerweise wird mit der Laseroberflächenbehandlung ein Aufschmelzen des Werkstoffes des Bauteiles in der Beschichtungszone zu einem Schmelzbad durchgeführt.

Beispielsweise ist das Bauteil aus Aluminium gefertigt und ist insbesondere ein Kurbelgehäuse einer Hubkolben-Brennkraftmaschinen, an dessen Zylinderlaufflächen von Zylindern die Beschichtung durchgeführt wird. Hierbei wird in einer bevorzugten Ausführungsform während der Herstellung der verschleißfesten Oberfläche ein Wasserraum des Kurbelgehäuses mit einem Kühlmedium, insbesondere Gas, Stickstoff oder einer Kühlflüssigkeit, durchströmt.

Zum Herstellen einer verschleißfesten Oberfläche wird in besonders bevorzugter Weise mittels des thermischen Spritzstrahles ein pulverförmiger Werkstoff, insbesondere Silizium oder eine Silizium-Legierung, auf den Werkstoff des Bauteils aufgetragen, wobei dieser Werkstoff des Bauteils bevorzugt Aluminium ist.

Beispielsweise wird mit der Bearbeitung der Oberfläche eine verschleißfeste Oberfläche, insbesondere in Form einer thermischen Spritzschicht, auf der Oberfläche des Bauteiles ausgebildet.

Zur Verkürzung einer Prozeßzeit erfolgt in beispielsweise weniger belasteten Bereichen eine lediglich partielle Bearbeitung, wobei ein thermischer Spritzstrahl die zu bearbeitende Oberfläche des Bauteiles wenigstens teilweise in einem vorbestimmten Muster überstreicht Beispielsweise umfaßt das vorbestimmte Muster wenigstens eine, insbesondere zwei gegensinnige oder mehr spiralartige Überstreichungen der zu bearbeitenden Oberfläche mit einer vorbestimmten Steigung mit einem Winkel α von beispielsweise 1° bis 90°. Alternativ oder zusätzlich umfaßt das Muster eine linienförmige, winkelförmige, kreuzweise und/oder punktförmige Überstreichung der zu bearbeitenden Oberfläche. Wenn hierbei die zu bearbeitende Oberfläche eine Zylinderfauffläche für einen Kolben in einem Zylinder eines Kurbelgehäuses einer Brennkraftmaschine ist, dann erfolgt die Überstreichung zweckmäßigerweise in einem vorbestimmten Muster in einem Bereich zwischen einem oberen und unteren Totpunkt des Kolbens.

In beispielsweise hoch belasteten Bereichen des Bauteiles überstreicht ein thermischer Spritzstrahl die zu bearbeitende Oberfläche des Bauteiles wenigstens teilweise vollflächig, um eine vollflächige Legierung zu erzielen. Ist hierbei die zu bearbeitende Oberfläche eine Zylinderlauffläche für einen Kolben in einem Zylinder eines Kurbelgehäuses einer Brennkraftmaschine, dann wird die vollflächige Überstreichung bevorzugt in einem Bereich des oberen und/oder unteren Totpunktes des Kolbens durchgeführt wird. Dabei wird die vollflächige Überstreichung beispielsweise wenigstens in einer Höhe durchgeführt, welche einer Breite eines Kolbenringpaketes des Kolbens entspricht, wobei es besonders bevorzugt ist, daß die vollflächige Überstreichung die Breite des Kolbenringpaketes um 12% eines Kolbenhubes, beispielsweise um ca. 5 mm, überragt.

Bei einer Vorrichtung der o.g. Art ist es erfindungsgemäß vorgesehen, daß die Vorrichtung einen Plasmabrenner und einen Laser aufweist, welche derart angeordnet sind, daß zum Bearbeiten der Oberfläche ein Laserstrahl des Lasers und ein Plasmastrahl des Plasmabrenners in einem Arbeitsgang die Oberfläche des Bauteils überstreichen.

Dies hat den Vorteil, daß eine Bearbeitung mit höherer Eindringtiefe, besserem Werkstoffeintrag und besserer Ankopplung eines mit dem Plasmastrahl aufgetragenen Werkstoffes an dem Werkstoff des Bauteils erzielt wird.

In einer bevorzugten Ausführungsform sind der Plasmabrenner und der Laser derart angeordnet, daß zuerst der Laserstrahl des Lasers und anschließend der Plasmastrahl des Plasmabrenners die Oberfläche des Bauteils überstreicht.

Beispielsweise bildet die Bearbeitung der Oberfläche eine verschleißfeste Oberfläche auf der Oberfläche des Bauteiles aus. Ferner umfaßt das Bauteil insbesondere eine Al-Si-Legierung und ist beispielsweise ein Kurbelgehäuse einer Hubkolben-Brennkraftmaschinen, an dessen Zylinderlaufflächen von Zylindern die Bearbeitung der Oberfläche erfolgt.

Das Bauteil ist beispielsweise aus Aluminium gefertigt, wobei der Plasmastrahl zum Ausbilden einer Al-Si-Legierung als verschleißfeste Oberfläche des Bauteils pulverförmiges Silizium austrägt. Dabei ist es besonders vorteilhaft, an das erfindungsgemäße Beschichtungsverfahren einen Hon-Vorgang anzuschließen, durch die die beschichtete Oberfläche geglättet werden kann.

Weitere Merkmale, Vorteile und vorteilhafte Ausgestaltungen der Erfindung ergeben sich aus den abhängigen Ansprüchen, sowie aus der nachstehenden Beschreibung der Erfindung anhand der beigefügten Zeichnungen. Diese zeigen in
- Fig. 1: eine bevorzugte Ausführungsform einer erfindungsgemäßen Vorrichtung in schematischer Schnittansicht,
- Fig. 2: eine vergrößerte Darstellung einer Bearbeitungszone,
- Fig. 3: eine schematische Darstellung eines ersten Bearbeitungsmusters,
- Fig. 4: eine schematische Darstellung eines zweiten Bearbeitungsmusters,
- Fig. 5: eine schematische Darstellung weiterer Bearbeitungsmuster.

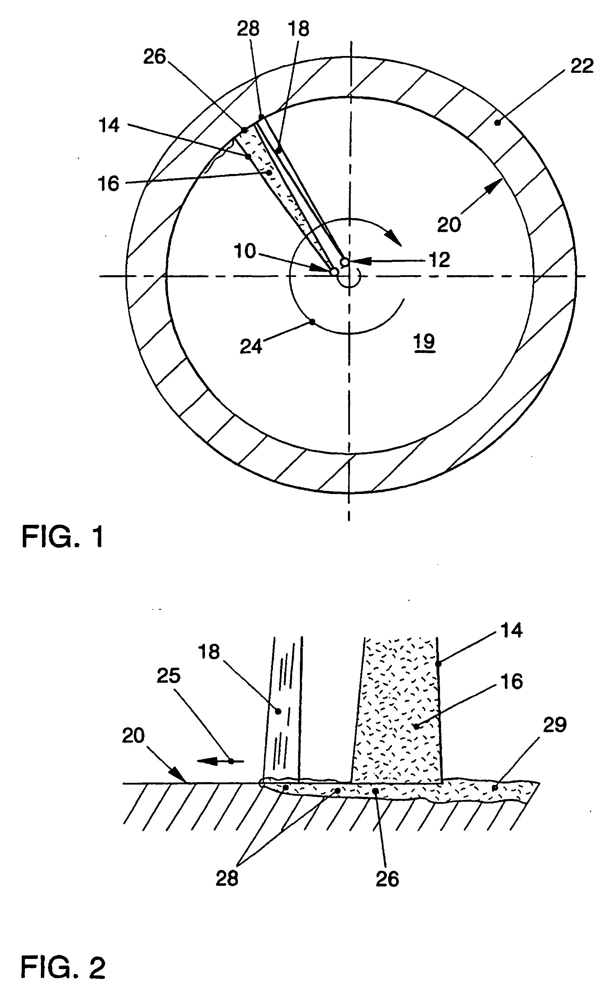

Die in Fig. 1 und 2 dargestellte bevorzugte Ausführungsform einer erfindungsgemäßen Vorrichtung umfaßt einen Plasmabrenner 10 und einen Laser 12, wobei der Plasmabrenner 10 einen Plasmastrahl 14 mit einem Beschichtungswerkstoff 16 und der Laser 12 einen Laserstrahl 18 abgibt. Ein zu bearbeitendes Bauteil ist hier ein nicht näher dargestelltes Kurbelgehäuse mit entsprechenden Zylinderbohrungen 19, wobei eine Oberfläche 20 einer Zylinderwand 22 zu bearbeiten ist. Das Kurbelgehäuse ist beispielsweise aus Aluminium gefertigt und die Bearbeitung der Oberfläche 20 dient zum Ausbilden einer verschleißfesten Oberfläche im Bereich einer Zylinderlaufbahn, auf der sich ein nicht dargestellter Kolben im Zylinder 19 auf und abbewegt. Hierzu weist der Beschichtungswerkstoff 16 beispielsweise pulverförmiges Silizium auf, welches als angeschmolzene Beschichtungselemente mittels des Plasmastrahles 14 auf die Oberfläche 20 aufgetragen werden. Hierzu überstreicht der Plasmastrahl 14 die Oberfläche 20, indem der Plasmabrenner 10 in den Zylinder 19 hinein geführt und dabei um die eigene Achse gedreht wird, wie mit Pfeilen 24 (Fig. 1) und 25 (Fig. 2) angedeutet. Derjenige Bereich, auf den der Plasmastrahl 14 momentan auftrifft, wird nachfolgend als Bearbeitungsbereich oder Beschichtungszone 26 bezeichnet. In diesem Bereich erfolgt ein Eintrag des Beschichtungswerkstoffes 16 in den Werkstoff der Zylinderwand 22.

Der zusätzlich zum Plasmabrenner 10 vorgesehene Laser 12 ist derart angeordnet, daß er in Bearbeitungsrichtung 25 vor dem Plasmastrahl 14 auf die Oberfläche 20 trifft. Hierbei ist die Energie des Lasers 12 derart gewählt, daß am Auftreffpunkt des Laserstrahles 18 der Werkstoff der Zylinderwandung 22 aufschmilzt, so daß unmittelbar vor dem Auftreffen des Plasmastrahles 14 eine Schmelze bzw. ein Schmelzbad 28 entsteht. Mit anderen Worten eilt der Plasmastrahl 14 dem Laserstrahl 18 nach und trägt den im Plasma enthaltenen Beschichtungswerkstoff 16 in die Schmelze 28. Auf diese Weise wird der Beschichtungswerkstoff 16 in optimaler Weise in den Werkstoff der Zylinderwand 22 einlegiert. Das Aufschmelzen mit dem Laserstrahl kann alternativ auch nach dem Auftragen des Beschichtungswerkstoffes 16 mittels des Plasmastrahles 14 erfolgen.

Erfindungsgemäß wird somit eine Laserbeschichtung mit einer Plasmabeschichtung gekoppelt und in einem einzigen Arbeitsschritt ausgeführt. Der Abstand zwischen Laserstrahl 18 und Plasmastrahl 14 ist dabei u.a. eine Funktion der Laserleistung, der gewünschten Anschmelztiefe, der Schmelzlänge, des Reflexionsgrades des Werkstoffes der Zylinderwand 22 und des Durchmessers des Zylinders 19.

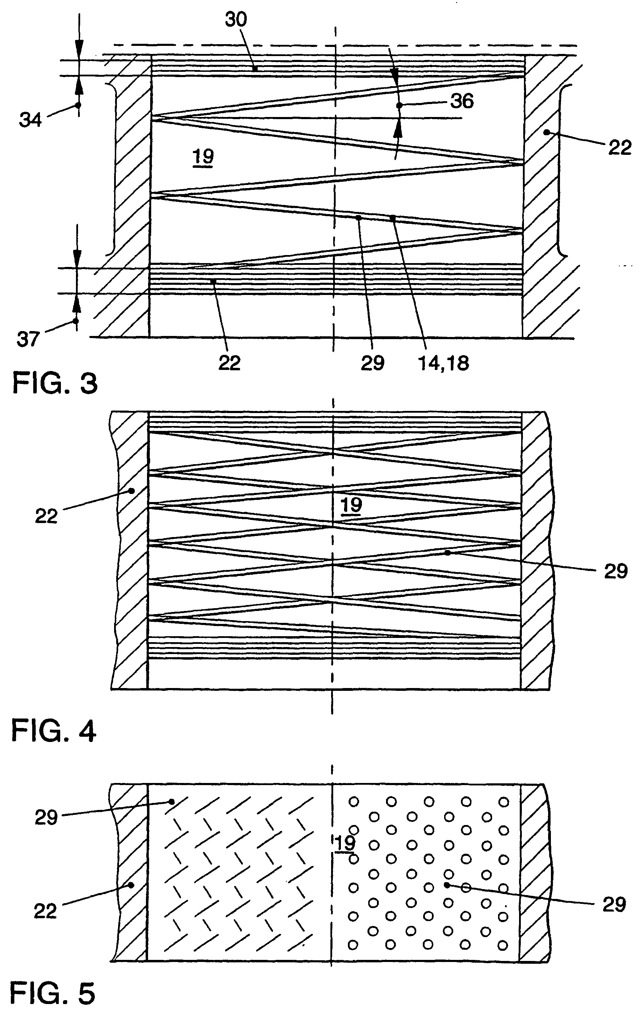

Die Überstreichung der Oberfläche 20 mit dem Doppelstrahl aus Laserstrahl 18 und Plasmastrahl 14 erfolgt dabei erfindungsgemäß nicht über die gesamte Zylinderlauffläche vollflächig, sondern in einem vorbestimmten Bereich gemäß einem vorbestimmten Muster. Die Fig. 3 bis 5 zeigen beispielhaft derartige Muster für eine Lasereinlegierungs- und -auftragsspur 29.

Wie aus Fig. 3 ersichtlich, erfolgt eine Überstreichung in Bereichen eines oberen Totpunktes 30 (OT) und eines unteren Totpunktes 32 (UT) eines nicht dargestellten Kolbens vollflächig und zwar in einer Höhe, welche einer Höhe 34 eines Kolbenringpaketes entspricht plus beispielsweise 5 mm, entsprechend 12% eines Hubes des Kolbens. In einem Bereich zwischen OT 30 und UT 32 erfolgt die Überstreichung der Oberfläche 20 wendelartig bzw. spiralartig mit einem Steigungswinkel α 36 von beispielsweise 1° bis 90°.

Bei dem Muster gemäß Fig. 4 erfolgt eine Überstreichung der Oberfläche 20 mit zwei gegenläufigen Wendeln. Hierbei sind in einer bevorzugten, nicht dargestellten Weiterbildung auch drei oder mehr Wendeln vorgesehen. Gemäß der Ausführungsform von Fig. 5 erfolgt die Überstreichung der Oberfläche 20 linienförmig, winkelförmig, kreuzweise oder punktförmig.

Die nur teilweise Überstreichung der Oberfläche 20 in weniger belasteten Bereichen stellt einerseits eine ausreichende verschleißfeste Oberfläche der Zylinderlaufbahn sicher und führt andererseits zu verkürzten Prozeßzeiten in der Fertigung und dementsprechend niedrigeren Kosten.

Erfindungsgemäß wird zum einen der Laser 12 benutzt, um einen Siliziumanteil 16 in einer Randschicht einer unter- bzw. naheutektischen Aluminiumlegierung der Zylinderwand 22 zu erhöhen. Dazu wird in dem dargestellten einstufigen Verfahren während des Laserprozesses mit einer geeigneten Zuführung AlSi-Pulver in die erzeugte Schmelze 28 eingebracht. In Abhängigkeit von der Beanspruchung können dabei Schichtdicken von über 2 mm realisiert werden. Hierbei wird ein nur geringer Aufmischungsgrad mit dem Grundwerkstoff angestrebt. Der Siliziumanteil im zugeführten Pulver liegt in einem Bereich zwischen 20% und 40%. Sind erheblich geringere Schichtdicken mit einem hohen Aufmischungsgrad erforderlich, werden Pulver 16 mit Siliziumanteilen zwischen 40% und 60% eingesetzt. Da sich die Pulverteilchen 16 vollständig in der Schmelze 28 auflösen sollen, ist es notwendig über die Verfahrensparameter Vorschubrate und Laserleistung eine minimale Schmelzbadlebensdauer zu gewährleisten. Für eine kostengünstige Bearbeitung ist eine geeignete Strahlintensitätsverteilung bevorzugt. Ferner sind Schmelzlinsen mit möglichst rechteckigem Querschnitt und damit geringer Spurüberlappung vorteilhaft.

Neben dem nach Bedarf vollflächigen Legieren der gesamten Zylinderlaufbahn ist vor allem eine partielle Bearbeitung vorgesehen. Die höher beanspruchten Bereiche des oberen und unteren Kolbenumkehrpunktes (obere Kolbentotpunkt OT 30 bzw. unterer Kolbentotpunkt UT 32) werden vollflächig umgeschmolzen, während in den weniger beanspruchten zwischenliegenden Bereichen nur vereinzelte Laserspuren (z.B. Rautenmuster, vgl. Fig. 3 bis 5) gelegt werden, die dort einen ausreichenden Verschleißschutz gewährleisten. Dieses Vorgehen verkürzt die Prozeßzeiten erheblich, da nur ein geringer Teil der Laufbahnoberfläche bearbeitet werden muß. Sollte eine Laseroberflächenbehandlung der gesamten Laufbahnfläche bzw. des größten Teils notwendig sein, so ist eine Kühlung des Zylinderkurbelgehäuses notwendig, was beispielsweise mittels Hindurchleiten eines Kühlmediums durch das vorhandene Kühlwassersystem des Kurbelgehäuses erfolgt. Bei nur partieller Bearbeitung ist es ausreichend, die eingebrachte Energie ausschließlich von der Ober- und Unterseite beispielsweise durch Kontakt mit wassergekühlten Kupferplatten abzufahren.

Es wird zusammenfassend eine Kombination des thermischen Spritzens (Plasmaspritzen) und der Laseroberflächenbearbeitung vorgeschlagen. Hierbei wird durch ein Umschmelzen einer vorherig aufgebrachten Spritzschicht die Porösität vermindert sowie bei genügend hoher Einschmelztiefe eine Verbindung mit dem Grundmetall hergestellt. Zweckmäßigerweise wird nur in den höher belasteten Bereichen vollflächig mit dem Laser 12 umgeschmolzen, während in den Restbereichen keine Umschmelzung oder nur eine Umschmelzung in einem musterartigen Bereich, wie beispielsweise Rauten, Schraffur oder Punkte, ausgeführt wird.

Es besteht nicht nur die Möglichkeit, nachträglich eine aufgebrachte Spritzschicht umzuschmelzen. Das direkt in Vorschubrichtung 25 vor der Plasmabeschichtungszone 26 von dem Laser 12 erzeugtes Schmelzbad 28 führt zu einer metallischen Bindung der im festen bzw. flüssigen Zustand auftreffenden Pulverteilchen 16 mit dem Substrat. Bei hohen Vorschubraten besteht der Schichtaufbau aus dem Substratwerkstoff, einer dünnen einlegierten Zone mit aufgelösten und teilweise nur angeschmolzenen ehemaligen Pulverteilchen 16 sowie einer dazu relativ dicken Spritzschicht. Durch diese Zwischenschicht läßt sich aufgrund verbesserter Mikroverzahnung bei entsprechend gewählten Verfahrensparametern die Schichthaftung zwischen Spritz- und Legierungsschicht erheblich steigern. Dies erspart eine sonst notwendige, aufwendige und kostenintensive Vorbereitung der zu beschichtenden Oberfläche 20 (Reinigen und Strahlen), um eine ausreichende Schichthaftung einer Spritzschicht zu erzielen. Um die beschichtete Oberfläche zu glätten, kann nach dem erfindungsgemäßen Beschichtungsverfahren in Honen erfolgen, über dessen Bearbeitungsschritte sich noch einmal verschiedene Oberflächengüten erreichen lassen.

Die vorgenannte Beschreibung einer bevorzugten Ausführungsform ist lediglich beispielhaft zur Erläuterung der Erfindung zu verstehen. Ein wesentlicher Kern der Erfindung liegt darin, thermisches Spritzen und Laseroberflächenbehandlung in einem Arbeitsschritt zu kombinieren. Die Anwendung des Laserstrahls und des thermischen Spritzens erfolgt beispielsweise gleichzeitig, d.h. der Laserstrahl 18 und der durch das thermische Spritzverfahren, wie beispielsweise Plasmaspritzen erzeugte Teilchenstrahl 14 treffen auf den gleichen Punkt. Alternativ erfolgt die Anwendung des Laserstrahls und des thermischen Spritzens hintereinander, d.h. zuerst wird beispielsweise voll- oder teilflächig eine thermische Spritzschicht aufgebracht und anschließend voll- oder teilflächig mit dem Laserstrahl 18 umgeschmolzen bzw. in die Oberfläche einlegiert. Das thermische Spritzen trägt nämlich lediglich den Beschichtungswerkstoff auf die Oberfläche auf, wodurch sich lediglich eine mechanische Verzahnung zwischen der Bauteiloberfläche und dem aufgetragenen Werkstoff ergibt. Die zusätzliche, nachträgliche Laserbehandlung schmilzt jedoch unmittelbar nach dem Auftragen die Bauteiloberfläche auf, so daß zusätzlich ein Einlegieren stattfindet.

## Patentansprüche

1. Verfahren zum Bearbeiten von Zylinderlaufflächen von Zylindern eines Kurbelgehäuses einer Hubkolben-Brennkraftmaschine, **dadurch gekennzeichnet, daß** in einem Arbeitsgang die Oberfläche der Zylinderlaufflächen der Zylinder sowohl mittels thermischem Spritzen als auch mittels einer Laseroberflächenbehandlung bearbeitet wird, wobei die Laseroberflächenbehandlung, insbesondere ein Umschmelzen, örtlich vor, im Bereich und/oder örtlich nach einer Bearbeitungszone auf der Zylinderlauffläche, in der das thermische Spritzen erfolgt, derart durchgeführt wird, daß mit der Laseroberflächenbehandlung ein Aufschmelzen des Werkstoffes des Kurbelgehäuses in der Beschichtungszone zu einem Schmelzbad durchgeführt wird, und wobei sich an die thermische Oberflächenbearbeitung ein Honen der beschichteten Oberfläche anschließt.

2. Verfahren nach Anspruch 1, **dadurch gekennzeichnet, daß** das thermische Spritzen mittels Flammspritzen, Plasmaspritzen oder HV-Spritzen durchgeführt wird.

3. Verfahren nach Anspruch 1, **dadurch gekennzeichnet, daß** während der Bearbeitung ein Wasserraum des Kurbelgehäuses mit einem Kühlmedium, insbesondere Gas, Stickstoff oder einer Kühlflüssigkeit, durchströmt wird.

4. Verfahren nach einem der vorhergehenden Ansprüche, **dadurch gekennzeichnet, daß** mittels des thermischen Spritzstrahles ein pulverförmiger Werkstoff, insbesondere Silizium oder eine Silizium-Legierung, auf den Werkstoff des Kurbelgehäuses aufgetragen wird.

5. Verfahren nach einem der vorhergehenden Ansprüche, **dadurch gekennzeichnet, daß** das Kurbelgehäuse aus Aluminium gefertigt ist.

6. Verfahren nach einem der vorhergehenden Ansprüche, **dadurch gekennzeichnet, daß** ein thermischer Spritzstrahl die zu bearbeitende Oberfläche der Zylinderlauffläche des Kurbelgehäuses wenigstens teilweise in einem vorbestimmten Muster überstreicht.

7. Verfahren nach Anspruch 6, **dadurch gekennzeichnet, daß** das vorbestimmte Muster wenigstens eine, insbesondere zwei gegensinnige oder mehr spiralartige Überstreichungen der zu bearbeitenden Oberfläche auf der Zylinderfauffläche mit einer vorbestimmten Steigung umfaßt.

8. Verfahren nach Anspruch 6 oder 7, **dadurch gekennzeichnet, daß** die Steigung einen Winkel α im Bereich von 1° bis 90° umfaßt.

9. Verfahren nach einem der Ansprüche 6 bis 8, **dadurch gekennzeichnet, daß** die zu bearbeitende Oberfläche eine Zylinderlaufüäche für einen Kolben der Brennkraftmaschine in dem Zylinder des Kurbelgehäuses der Brennkraftmaschine bildet und die Überstreichung in einem vorbestimmten Muster in einem Bereich zwischen einem oberen und einem unteren Totpunkt des Kolbens durchgeführt wird.

10. Verfahren nach einem der Ansprüche 6 bis 8, **dadurch gekennzeichnet, daß** das Muster eine linienförmige, winkelförmige, kreuzweise und/oder punktförmige Überstreichung der zu bearbeitenden Oberfläche umfaßt.

11. Verfahren nach einem der vorhergehenden Ansprüche, **dadurch gekennzeichnet, daß** ein thermischer Spritzstrahl die zu bearbeitende Zylindertauffläche des Kurbelgehäuses wenigstens teilweise vollflächig überstreicht.

12. Verfahren nach Anspruch 11, **dadurch gekennzeichnet, daß** die zu bearbeitende Zylinderlauffläche vollflächig während der Bearbeitung in einem Bereich des oberen und/oder unteren Totpunktes des Kolbens durchgeführt wird.

13. Verfahren nach Anspruch 12, **dadurch gekennzeichnet, daß** die vollflächige Überstreichung wenigstens in einer Höhe durchgeführt wird, welche einer Breite eines Kolbenringpaketes des Kolbens entspricht.

14. Verfahren nach Anspruch 13, **dadurch gekennzeichnet, daß** die vollflächige Überstreichung die Breite des Kolbenringpaketes um 12% eines Kolbenhubes, vorzugsweise um etwa 5 mm, überragt.

15. Vorrichtung zum Bearbeiten von Oberflächen (20) von Zylinderlaufflächen von Zylindern (19) einer Hubkolben-Brennkraftmaschine, **dadurch gekennzeichnet, dass** die Vorrichtung einen Plasmabrenner (10) und einen Laser (12) aufweist, welche derart angeordnet sind, dass zum Bearbeiten der Oberfläche (20) ein Laserstrahl (18) des Lasers (12) und ein Plasmastrahl (14) des Plasmabrenners (10) in einem Arbeitsgang die Oberfläche (20) überstreichen, wobei der Plasmabrenner (10) derart ausgebildet ist, dass er einen Plasmastrahl aus pulverförmigem Silizium zum Ausbilden einer Al-Si-Legierung auf der Oberfläche (20) aufträgt und wobei der Plasmabrenner (10) und der Laser (12) derart angeordnet sind, dass zuerst der Laserstrahl (18) des Lasers (12) und anschließend der Plasmastrahl (14) des Plasmabrenners (10) die Oberfläche (20) überstreicht.

## Claims

1. Method of treating cylinder barrels of cylinders of a crankcase of a reciprocating-piston internal combustion engine, **characterized in that** the surface of the cylinder barrel of the cylinders is treated both by means of thermal spraying and by means of a laser surface treatment in one operation, the laser surface treatment, in particular remelting, being carried out locally in front of, in the region of, and/or locally behind a treatment zone on the cylinder barrel in which the thermal spraying is effected in such a way that, with the laser surface treatment, the material of the crankcase is melted in the coating zone to form a molten pool, and the thermal surface treatment being followed by honing of the coated surface.

2. Method according to Claim 1, **characterized in that** the thermal spraying is carried out by means of flame spraying, plasma spraying or high-velocity spraying.

3. Method according to Claim 1, **characterized in that** a cooling medium, in particular gas, nitrogen or a cooling liquid, flows through a water space of the crankcase during the treatment.

4. Method according to one of the preceding claims, **characterized in that** a powdery material, in particular silicon or a silicon alloy, is applied to the material of the crankcase by means of the thermal spray jet.

5. Method according to one of the preceding claims, **characterized in that** the crankcase is made of aluminium.

6. Method according to one of the preceding claims, **characterized in that** a thermal spray jet sweeps the surface, to be treated, of the cylinder barrel of the crankcase at least partly in a predetermined pattern.

7. Method according to Claim 6, **characterized in that** the predetermined pattern comprises at least one, in particular two opposed or more spiral-like sweeps of the surface, to be treated, on the cylinder barrel with a predetermined pitch.

8. Method according to Claim 6 or 7, **characterized in that** the pitch has an angle α within the range of 1° to 90°.

9. Method according to one of Claims 6 to 8, **characterized in that** the surface to be treated forms a cylinder barrel for a piston of the internal combustion engine in the cylinder of the crankcase of the internal combustion engine, and the sweeping is carried out in a predetermined pattern in a region between a top dead centre and a bottom dead centre of the piston.

10. Method according to one of Claims 6 to 8, **characterized in that** the pattern comprises linear, angular, crosswise and/or spot-like sweeping of the surface to be treated.

11. Method according to one of the preceding claims, **characterized in that** a thermal spray jet sweeps the cylinder barrel, to be treated, of the crankcase at least partly over the full surface area.

12. Method according to Claim 11, **characterized in that**, during the treatment, the sweeping of the cylinder barrel to be treated is carried out over the full surface area in a region of the top and/or bottom dead centre of the piston.

13. Method according to Claim 12, **characterized in that** the sweeping over the full surface area is carried out at least at a level which corresponds to a width of a piston ring pack of the piston.

14. Method according to Claim 13, **characterized in that** the sweeping over the full surface area projects beyond the width of the piston ring pack by 12% of a piston stroke, preferably by about 5 mm.

15. Device for treating surfaces (20) of cylinder barrels of cylinders (19) of a reciprocating-piston internal combustion engine, **characterized in that** the device has a plasma torch (10) and a laser (12), which are arranged in such a way that, for treating the surface (20), a laser beam (18) of the laser (12) and a plasma jet (14) of the plasma torch (10) sweep the surface (20) in one operation, the plasma torch (10) being designed in such a way that it applies a plasma jet of powdery silicon to the surface (20) for forming an Al-Si alloy, and the plasma torch (10) and the laser (12) being arranged in such a way that first the laser beam (18) of the laser (12) and then the plasma jet (14) of the plasma torch (10) sweeps the surface (20).

## Revendications

1. Procédé pour traiter des faces de glissement de cylindres d'un carter moteur d'un moteur à combustion interne à pistons alternatifs, **caractérisé en ce que**, en une même opération, la surface des faces de glissement des cylindres est traitée à la fois par pulvérisation thermique et par un traitement de surface au laser, sachant que le traitement de surface au laser, notamment une refusion, est effectué spatialement en avant, dans la région et/ou en arrière d'une zone de traitement de la face de glissement de cylindre dans laquelle s'effectue la pulvérisation thermique, de telle sorte que le traitement de surface au laser engendre une fusion en un bain de fusion du matériau du carter moteur dans la zone de revêtement, et sachant que le traitement thermique de surface est suivi d'un pierrage de la surface revêtue.

2. Procédé selon la revendication 1, **caractérisé en ce que** la pulvérisation thermique est effectuée par pulvérisation à la flamme, pulvérisation au plasma ou pulvérisation HV (pulvérisation à grande vitesse).

3. Procédé selon la revendication 1, **caractérisé en ce que**, pendant le traitement, une chambre d'eau du carter moteur est traversée par un flux de réfrigérant, notamment un gaz, de l'azote ou un liquide de refroidissement.

4. Procédé selon l'une quelconque des revendications précédentes, **caractérisé en ce qu'**au moyen du jet de pulvérisation thermique, un matériau pulvérulent, notamment du silicium ou un alliage de silicium, est appliqué sur le matériau du carter moteur.

5. Procédé selon l'une quelconque des revendications précédentes, **caractérisé en ce que** le carter moteur est fabriqué en aluminium.

6. Procédé selon l'une quelconque des revendications précédentes, **caractérisé en ce qu'**un jet de pulvérisation thermique balaye au moins partiellement suivant un modèle prédéfini la surface à traiter de la face de glissement de cylindre du carter moteur.

7. Procédé selon la revendication 6, **caractérisé en ce que** le modèle prédéfini comprend au moins un et notamment deux ou plus de deux balayages en spirale en sens contraires de la surface à traiter sur la face de glissement de cylindre, avec une pente prédéfinie.

8. Procédé selon la revendication 7, **caractérisé en ce que** la pente présente un angle α compris entre 1° et 90°.

9. Procédé selon l'une quelconque des revendications 6 à 8, **caractérisé en ce que** la surface à traiter forme une surface de glissement pour un piston du moteur à combustion interne dans le cylindre du carter moteur du moteur à combustion interne, et le balayage suivant un modèle prédéfini est effectué dans une région située entre un point mort haut et un point mort bas du piston.

10. Procédé selon quelconque l'une des revendications 6 à 8, **caractérisé en ce que** le modèle comprend un balayage linéaire, angulaire, en croix et/ou ponctuel de la surface à traiter.

11. Procédé selon l'une quelconque des revendications précédentes, **caractérisé en ce qu'**un jet de pulvérisation thermique balaye au moins partiellement sur toute la surface la face de glissement de cylindre du carter moteur à traiter.

12. Procédé selon la revendication 11, **caractérisé en ce que** la face de glissement de cylindre à traiter est balayée sur toute la surface dans la région du point mort haut et/ou du point mort bas du piston.

13. Procédé selon la revendication 12, **caractérisé en ce que** le balayage sur toute la surface est effectué au moins à une hauteur qui correspond à une largeur d'un groupe de segments du piston.

14. Procédé selon la revendication 13, **caractérisé en ce que** le balayage sur toute la surface dépasse la largeur du groupe de segments de piston de 12% d'une course de piston, de préférence d'environ 5 mm.

15. Dispositif pour traiter des surfaces (20) de faces de glissement de cylindres (19) d'un moteur à combustion interne à pistons alternatifs, **caractérisé en ce que** le dispositif présente une torche à plasma (10) et un laser (12), qui sont disposés de telle sorte que, afin de traiter la surface (20), un faisceau laser (18) du laser (12) et un jet de plasma (14) de la torche à plasma (10) balayent la surface (20) en une même opération, sachant que la torche à plasma (10) est conçue de telle sorte qu'elle applique par un jet de plasma de la poudre de silicium sur la surface (20) afin de former un alliage Al-Si, et sachant que la torche à plasma (10) et le laser (12) sont disposés de telle sorte que c'est d'abord le faisceau laser (18) du laser (12) puis le jet de plasma (14) de la torche à plasma (10) qui balaye la surface (20).
